**Europäisches Patentamt**

**European Patent Office**

**Office européen des brevets**

(19)

(11) Numéro de publication : **0 329 541 B1**

(12) **FASCICULE DE BREVET EUROPEEN**

(45) Date de publication du fascicule du brevet :
**25.03.92 Bulletin 92/13**

(51) Int. Cl.⁵ : **G21C 7/08, G21C 5/02**

(21) Numéro de dépôt : **89400400.1**

(22) Date de dépôt : **13.02.89**

(54) **Equipements internes supérieurs de réacteur nucléaire, à dispositifs de guidage de grappes.**

(30) Priorité : **15.02.88 FR 8801755**

(43) Date de publication de la demande :
**23.08.89 Bulletin 89/34**

(45) Mention de la délivrance du brevet :
**25.03.92 Bulletin 92/13**

(84) Etats contractants désignés :
**BE CH DE ES GB LI SE**

(56) Documents cités :
**EP-A- 0 054 789**
**EP-A- 0 229 548**
**EP-A- 0 238 390**
**FR-A- 2 168 564**

(73) Titulaire : **FRAMATOME**
**Tour Fiat 1, Place de la Coupole**
**F-92400 Courbevoie (FR)**

(72) Inventeur : **Chevereau, Gérard**
**84 Avenue Thiers**
**F-93340 Le Raincy (FR)**
Inventeur : **Desfontaines, Guy**
**18, rue Jean Jaurès**
**F-92800 Puteaux (FR)**
Inventeur : **Dumortier, Bernard**
**11, Bis Passage Courtois**
**F-75011 Paris (FR)**

(74) Mandataire : **Fort, Jacques et al**
**CABINET PLASSERAUD 84, rue d'Amsterdam**
**F-75009 Paris (FR)**

## Description

La présente invention concerne les équipements internes supérieurs de réacteurs nucléaires refroidis et modérés par circulation d'eau, conformes au préambule de la revendication 1.

L'invention trouve une application particulièrement importante, bien que non exclusive dans les réacteurs nucléaires à eau sous pression dits "avancés", sous-modérés et/ou à variation de spectre, dont les assemblages combustibles sont souvent répartis dans le coeur avec un écartement plus court que dans les réacteurs à neutrons thermiques actuellement en service. La diminution d'écartement entraîne un rapprochement des guides de grappe qui réduit la section de passage offerte au réfrigérant sortant du coeur vers le haut et dont les lignes d'écoulement s'incurvent vers les tubulures au travers du réseau des guides de grappe.

La section de passage laissée libre est encore plus faible dans le cas des réacteurs à variation de spectre, qui comportent non seulement des guides de grappes absorbantes de pilotage mais aussi des guides de grappes de variation de spectre, destinées à modifier le volume d'eau dans le coeur et éventuellement (dans le cas de grappes de crayons contenant du matériau fertile) à durcir encore le spectre par absorption sélective des neutrons lents.

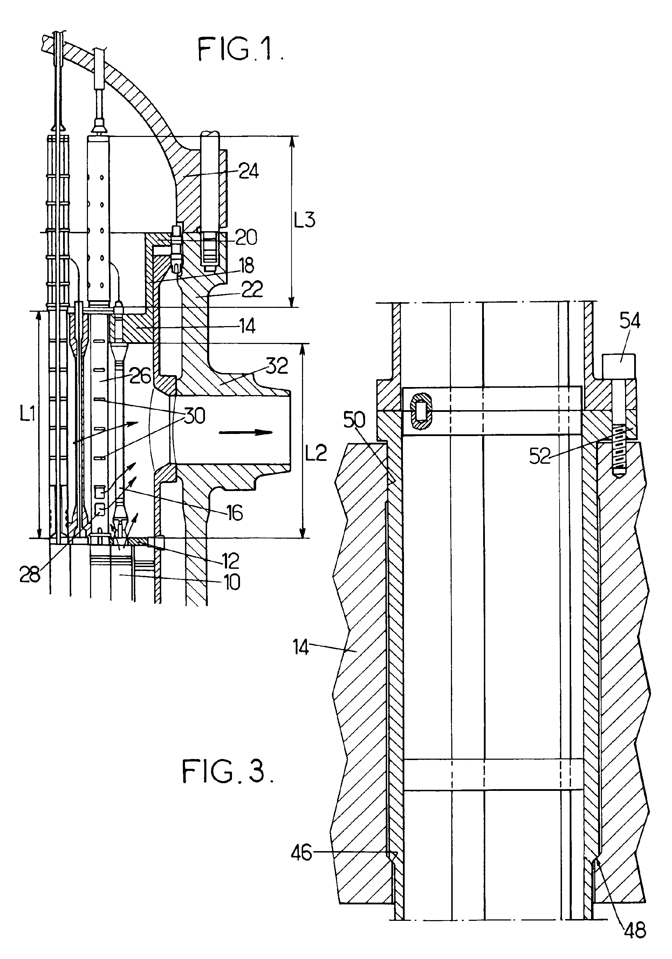

Dans les réacteurs actuels à eau sous pression et à neutrons thermiques, tels que ceux décrits dans les documents EP-A-0 079 828 (FRAMATOME) et FR-A-2 399 715 (WESTINGHOUSE) l'eau sous pression sortant du coeur se dirige vers les ajutages de sortie à travers les internes supérieurs en passant entre les guides de grappe et éventuellement les entretoises qui relient les plaques. Dans la disposition connue montrée à titre d'exemple en figure 1, le coeur 10 est surmonté par les équipements internes supérieurs. Ces équipements comprennent une plaque supérieure de coeur 12 fixée rigidement à une plaque 14 support de guides 26 par des entretoises 16 régulièrement réparties. La plaque support 14 comporte un fond auquel sont fixées les entretoises 16, relié par une virole 18 à une bride 20 d'appui sur la cuve 22 du réacteur fermé par un couvercle 24.

Les guides de grappes 26 sont disposés en des emplacements situés entre les entretoises, au droit de ceux des assemblages combustibles qui sont prévus pour recevoir des grappes. Les guides 26 montrés en figure 1 sont en deux parties. La partie inférieure, placée dans les internes, est munie d'une bride de fixation en appui sur la face supérieure du fond de la plaque support 14. L'extrémité basse de cette partie inférieure s'engage dans des trous de guidage ménagés dans la plaque supérieure de coeur 12. La partie supérieure des guides est fixée par brides et boulons sur la partie inférieure.

L'eau sort du coeur par des ouvertures de la plaque supérieure de coeur 12 ménagées entre les guides de grappe ou au pied des entretoises 16 et par des fenêtres 28 pratiquées dans la zone basse des guides de grappe. Ces guides de grappe portent des cartes de guidage 30 présentant une découpe correspondant à la répartition des crayons de la grappe.

Habituellement, le fond de la plaque support 14 est à un niveau nettement supérieur à celui des ajutages de sortie 32. Les longueurs entre appuis, L1 pour les guides de grappe et L2 pour les entretoises, sont importantes et donnent à ces organes une flexibilité qui, lorsque la section de passage laissée au réfrigérant devient notablement inférieure à celle que l'on trouve dans les réacteurs actuels et donc lorsque les vitesses d'écoulement augmentent en conséquence, se traduit par des phénomènes vibratoires inacceptables.

La présente invention vise à réaliser des équipements internes de réacteurs nucléaires répondant mieux que ceux antérieurement connus aux exigences de la pratique, notamment en ce que le risque d'instabilités et de vibrations des équipements internes supérieurs est considérablement réduit.

Dans ce but l'invention propose notamment des équipements internes du genre ci-dessus défini, conformes à la partie caractérisante de la revendication 1.

La rigidité des guides de grappe est augmentée par l'abaissement de leur point d'appui haut et leur encastrement dans la plaque support. Dans la dernière disposition ci-dessus mentionnée, la plaque d'entretoisement radial peut jouer au surplus un rôle d'étanchéité entre une manchette de guidage de la tige de commande de la grappe (manchette fixée au couvercle de la cuve) et le guide de grappe et limiter le débit traversant le dôme au-dessous du couvercle.

L'invention sera mieux comprise à la lecture de la description qui suit d'un mode particulier de réalisation, donné à titre d'exemple non limitatif. La description se réfère aux dessins qui l'accompagnent, dans lesquels :

– la figure 1, déjà mentionnée, montre une fraction des internes supérieurs d'un réacteur nucléaire à eau sous pression suivant l'art antérieur ;

– la figure 2, similaire à la figure 1, montre schématiquement la partie haute d'un réacteur nucléaire suivant un mode particulier de réalisation de l'invention ;

– la figure 3 est une vue de détail à grande échelle montrant un mode de fixation d'un guide sur la plaque support 14 montrée en figure 2.

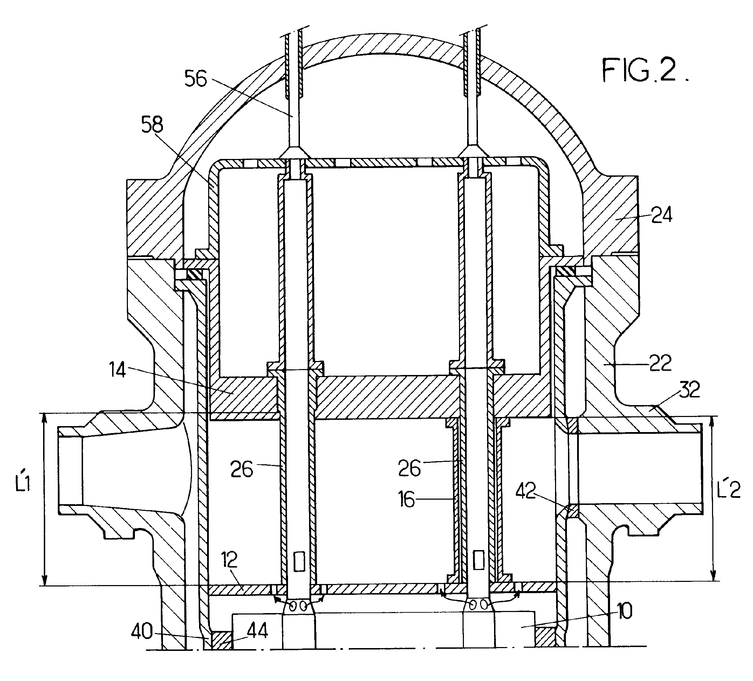

Le réacteur nucléaire montré en figure 2 a une constitution générale similaire à celle de la figure 1. Il comprend encore une cuve 22 de résistance à la pression fermée par un couvercle 24. Le coeur 10 est constitué d'assemblages combustibles juxtaposés, dont la section droite peut être hexagonale ou carrée.

Pour plus de simplicité, seuls deux assemblages du coeur ont été représentés. Le coeur est porté par une plaque inférieure (non représentée) soutenue par une jupe 40 portée par une bride reposant sur la cuve et munie d'adaptateurs 42 de raccordement aux tubulures 32. L'espace compris entre la jupe 40 et la périphérie du coeur est cette fois occupée par un garnissage métallique 44 constituant réflecteur de neutrons.

Comme dans le cas de la figure 1, les internes supérieurs comprennent une plaque 14 support de guides 26. La plaque support 14 est reliée à la plaque supérieure de coeur 12 par des entretoises tubulaires 16, situées cette fois autour de certains des guides 26.

La plaque support 14 comporte, dans la disposition suivant l'invention montrée en figure 2, une virole cylindrique de longueur nettement supérieure à celle des viroles traditionnelles de sorte que la face inférieure du fond est juste au dessus du niveau des tubulures 32. Chacun des guides 26 repose sur le fond de la plaque support 14 par appui d'un redan externe 46 dont il est muni sur un épaulement correspondant 48 ménagé aussi bas que possible dans l'ouverture de passage dans la plaque 14 (figure 3). Le redan 46 et l'épaulement 48 sont avantageusement inclinés, par exemple à 45°, sur l'horizontale. La partie haute de l'ouverture de passage constitue un alésage 50 dans lequel le guide s'engage à frottement doux pour constituer un encastrement. Dans la pratique, l'épaulement 48 sera toujours placé dans la moitié inférieure de l'épaisseur de la plaque support 14 et souvent à peu près à une distance à partir du bas de la plaque égale à environ le dixième de l'épaisseur. L'alésage 50 aura lui aussi souvent une longueur à peu près égale au dixième de l'épaisseur de la plaque support.

Grâce à ces modifications de la disposition traditionnelle les longueurs L1 et L2 (figure 1) sont réduites à des valeurs L'1 et L'2. A titre d'exemple, dans le cas d'un réacteur de 1300 MWe, les longueurs L1 et L2 sont à l'heure actuelle respectivement d'environ 2430 et 2125 mm. Elles peuvent respectivement être réduites à 2150 et 1750 mm par mise en oeuvre de l'invention.

Chaque guide 26 est constitué de deux pièces. La pièce inférieure présente une bride haute 52 destinée à être fixée, par exemple par des boulons 54 répartis autour de l'axe, sur la plaque support 14. Les mêmes boulons 54 permettent de fixer une bride de la pièce haute du guide à la bride 52. Des pions de centrage relatifs des deux brides (non représentés) peuvent être prévus.

L'abaissement du fond de la plaque support 14, s'il a un effet favorable sur les longueurs entre appuis des guides et des entretoises, conduit en contrepartie à un allongement des pièces hautes des guides 26. La longueur en porte à faux, égale à L3 dans le cas de la figure 1, serait accrue si aucun palliatif n'était utilisé et cet accroissement de longueur pourrait provoquer des défauts d'alignement entre le débouché supérieur du guide et l'axe de la manchette correspondante 56 liée au couvercle 24, traversée par la tige de commande de la grappe associée.

Dans le mode de mise en oeuvre de l'invention montré en figure 2, le risque de défaut d'alignement est écarté par mise en place d'une plaque d'entretoisement radial 58. Cette plaque a une forme de chapeau. Elle comporte une bride de fixation sur la bride de la plaque support 14, une virole cylindrique et un fond placé à un niveau supérieur à celui de la bride. Ce fond est percé d'ouvertures destinées chacune à recevoir la partie terminale haute d'un guide et à le maintenir centré. Cette partie terminale peut être de diamètre réduit et s'engager à frottement doux dans l'ouverture. Le fond de la plaque 58 peut être prévu à un niveau tel que les tulipes terminales des manchettes 56 viennent s'appliquer sur elle, ce qui assure une étanchéité limitant le débit d'eau qui traverse le dôme immédiatement au dessous du couvercle.

Cette plaque comporte de larges orifices disposés soit sur le fond, soit sur la surface de la virole cylindrique, permettant le passage de l'eau de refroidissement dans le volume défini par la plaque 14 et la plaque 58.

L'invention est susceptible de nombreuses variantes de réalisation. En particulier, certains seulement des guides peuvent prendre appui par des redans sur le fond de la plaque support 14, ceux des tubes soumis à des contraintes plus faibles par l'écoulement étant fixés par brides de façon classique. Ce dernier montage peut notamment s'appliquer à ceux des guides 26 qui sont entourés par une entretoise 16 qui les soustrait dans une large mesure à l'action de l'eau en circulation.

**Revendications**

1. Equipements internes supérieurs de réacteur nucléaire refroidi et modéré par circulation d'eau, comprenant une cuve (22) munie de tubulures latérales (32) de sortie d'eau et fermée par un couvercle (24), lesdits équipements ayant une plaque supérieure de coeur (12), une plaque support (14) placée au-dessus de la plaque supérieure de coeur et à distance de cette dernière et des tubes de guidage de grappe (26) qui relient les deux plaques et qui font saillie verticalement au-dessus de la plaque support (14), chaque tube ayant une bride (52) fixée à la face supérieure de la plaque support, caractérisés en ce que le fond de la plaque support (14) est situé à un niveau juste supérieur à celui des tubulures de sortie et en ce que chaque tube de guidage (26) s'engage à frottement doux dans un alésage (50) constituant la partie haute d'une ouverture de passage du tube de guidage dans la plaque support, pour constituer un encastrement et présente un redan externe (46) maintenu en appui contre un épaulement (48) ménagé dans l'ouverture de passage, dans la moitié inférieure de l'épaisseur de la plaque support (14), par les moyens de fixation de la bride (52).

2. Equipements internes selon la revendication 1, caractérisés en ce que l'extrémité supérieure de la partie en saillie de chaque guide (26) est centrée par une plaque d'entretoisement radial (58) ayant une bride d'appui sur la cuve, un fond situé à un niveau supérieur à celui de la bride et une virole reliant le fond et la bride.

3. Equipements internes selon la revendication 2, caractérisés en ce que le fond de la plaque d'entretoisement radial (58) est placé à un niveau tel qu'il constitue un appui sensiblement étanche pour des manchettes (56) de passage des tiges de commande de grappe.

4. Equipements internes selon la revendication 1, 2 ou 3, caractérisés en ce que ledit épaulement (48) est ménagé à une distance de la face inférieure de la plaque support (14) à peu près égale au dixième de l'épaisseur de cette plaque support.

## Patentansprüche

1. Innere obere Einbauten eines durch Wasserkreislauf gekühlten und moderierten Kernreaktors mit einem Kühlmitteldruckgefäß (22), das mit seitlichen Wasserabflußrohrleitungen (32) versehen ist und das mit einem Deckel (24) verschlossen ist, wobei die Einbauten eine obere Kernplatte (12), eine oberhalb der oberen Kernplatte und in einem Abstand zu dieser angeordnete Trägerplatte (14) und Bündelführungsrohre (26), die die beiden Platten miteinander verbinden und die vertikal oberhalb der Trägerplatte (14) hervorstehen, aufweisen, wobei jedes Rohr einen Flansch (52) aufweist, der an der oberen Oberfläche der Trägerplatte befestigt ist, dadurch gekennzeichnet, daß der Boden der Trägerplatte (14) auf einer Ebene gerade über jener der Abflußrohrleitungen angeordnet ist und daß jedes Führungsrohr (26) leicht reibend in eine Bohrung (50), die den oberen Teil einer Durchgangsöffnung des Führungsrohrs in der Trägerplatte bildet, eingebracht ist, um eine Einfassung zu bilden, und eine äußere Stufe (46) aufweist, die durch die Befestigungsmittel des Flansches (52) gegen einen in der Durchgangsöffnung in der unteren Hälfte der Dicke der Trägerplatte (14) ausgebildeten Absatz (48) in Anschlag gehalten ist.

2. Innere Einbauten nach Anspruch 1, dadurch gekennzeichnet, daß das obere Ende des hervorstehenden Teils jeder Führung (26) durch eine Radialbeabstandungsplatte (58), die einen Auflageflansch auf dem Druckgefäß, einen auf einem höheren Niveau als dem des Flansches liegenden Boden und einen den Boden mit dem Flansch verbindenden Ring aufweist, zentriert ist.

3. Innere Einbauten nach Anspruch 2, dadurch gekennzeichnet, daß der Boden der Radialbeabstandungsplatte (58) auf einem solchen Niveau angeordnet ist, daß er eine im wesentlichen dichte Auflage für die Durchgangsmanschette (56) der Bündelsteuerstangen darstellt.

4. Innere Einbauten nach Anspruch 1, 2 oder 3, dadurch gekennzeichnet, daß der Absatz (48) in einer Entfernung von der unteren Oberfläche der Trägerplatte (14), die etwa gleich einem Zehntel der Dicke der Trägerplatte ist, angeordnet ist.

## Claims

1. Upper internal equipments of a water-cooled and moderated nuclear reactor, comprising a vessel (22) provided with lateral water outlet nozzles (32) and closed by a cover (24), said equipments having an upper core plate (12), a support plate (14) located above the upper core plate and at a distance therefrom and cluster guide tubes (26) which connect the two plates and which vertically project above the support plate (14), each tube having a flange (52) secured to the upper surface of the support plate, characterized in that the bottom of the support plate (14) is located at a level just above that of the outlet nozzles and in that each guide tube (26) has a sliding fit in a bore (50) constituting the upper portion of an opening for passage of a guide tube through the support plate, for constituting an embedment, and has an external shoulder (46) maintained in contact with a shoulder (48) formed in the passage opening, in the lower half of the thickness of the support plate (14) by the means for securing the flange (52).

2. Internal equipments according to claim 1, characterized in that the upper end of the projecting portion of each guide (26) is centered by a radial spacing plate (58) having a flange for support by the vessel, an end wall situated at level higher than that of the flange and a ring connecting the end wall and the flange.

3. Internal equipments according to claim 2, characterized in that the bottom wall of the radial spacing plate (58) is at such a level that it constitutes a substantially fluid tight abutment for sleeves (56) accomodating cluster drive shafts.

4. Internal equipments according to claim 1, 2 or 3, characterized in that said shoulder (48) is formed at a distance from the lower surface of the support plate (14) which is approximatively equal to one-tenth of the thickness of the support plate.

# FIG.1.

# FIG.3.

FIG.2.